(19) 

(11) **EP 4 131 554 B1**

(12) # EUROPEAN PATENT SPECIFICATION

(45) Date of publication and mention of the grant of the patent:
**09.09.2026 Bulletin 2026/37**

(21) Application number: **20936355.5**

(22) Date of filing: **20.05.2020**

(51) International Patent Classification (IPC):
***H01M 10/058*** *(2010.01)* ***H01M 4/04*** *(2006.01)*
***H01M 4/13*** *(2010.01)* ***H01M 4/525*** *(2010.01)*
***H01M 4/62*** *(2006.01)* ***H01M 4/66*** *(2006.01)*
*H01M 4/02* *(2006.01)*

(52) Cooperative Patent Classification (CPC):
**H01M 4/0404; H01M 4/525; H01M 4/625; H01M 4/661;** H01M 2004/021; H01M 2004/027; Y02E 60/10; Y02P 70/50

(86) International application number:
**PCT/CN2020/091311**

(87) International publication number:
**WO 2021/232288 (25.11.2021 Gazette 2021/47)**

(54) **SECONDARY BATTERY AND PREPARATION METHOD THEREFOR, AND DEVICE CONTAINING SECONDARY BATTERY**

SEKUNDÄRBATTERIE UND HERSTELLUNGSVERFAHREN DAFÜR SOWIE VORRICHTUNG MIT DER SEKUNDÄRBATTERIE

BATTERIE SECONDAIRE ET SON PROCÉDÉ DE PRÉPARATION, ET DISPOSITIF COMPRENANT LA BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023 Bulletin 2023/06**

(73) Proprietor: **Contemporary Amperex Technology (Hong Kong) Limited**
**Central, Central And Western District (HK)**

(72) Inventors:
- **WANG, Bangrun**
  **Ningde City, Fujian 352100 (CN)**
- **SUN, Xin**
  **Ningde City, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(56) References cited:
**CN-A- 104 603 988** **CN-A- 108 352 494**
**CN-A- 109 980 177** **CN-A- 110 010 902**
**US-A1- 2015 244 017** **US-A1- 2020 112 064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 131 554 B1

## Description

### TECHNICAL FIELD

This application relates to a secondary battery and a preparation method thereof, and further relates to an apparatus containing such secondary battery.

### BACKGROUND

Secondary batteries have been widely used in various consumer electronic products and electric vehicles due to their prominent advantages of light weight, no pollution, and no memory effect.

With the development of the new energy industry, people propose higher requirements for use of secondary batteries. How secondary batteries can have both high energy density and good electrochemical performance is a key challenge in the field of secondary batteries.

In view of this, it is necessary to provide a secondary battery which delivers good performance in various aspects, so as to meet the use requirements of users.

CN108352494A relates to a non-aqueous electrolyte secondary cell with a strip-shaped positive-electrode core and a positive-electrode active-material layer provided on at least one surface of the positive-electrode core. A blank part is formed on one end of the positive-electrode core in the width direction, the blank part exposing the core surface to which a positive-electrode lead is to be connected. The positive-electrode active-material layer has a thin part in at least one portion of a first area lined up with the blank part in the lengthwise direction of the positive-electrode core, the thin part having a layer thickness that is less than a second area which is an area other than the first region.

CN110010902A relates to an electrode pole piece and an electrochemical device comprising the same. The positive pole piece comprises a positive first region and a positive second region, and the unit area capacity of the positive second region is larger than or equal to the unit area capacity of the positive first region. The negative pole piece comprises a negative first region and a negative second region, wherein the unit area capacity of the negative second region is smaller than or equal to 98% of the unit area capacity of the negative first region.

CN109980177A relates to an electrode pole piece and an electrochemical device including the electrode pole piece. The anode pole piece of the invention includes an anode first region and an anode second region, wherein the DC impedance value of the anode second region is less than or equal to 98% of the DC impedance value R1 of the anode first region. The cathode pole piece includes a cathode first region and a cathode second region, wherein the DC impedance value of the cathode second region is greater than the DC impedance value of the cathode first region.

US2020/112064A1 relates to a battery including a positive electrode having a first strip shape and a positive electrode lead, and a negative electrode having a second strip shape and a negative electrode lead. First ends of the positive electrode and the negative electrode in a longitudinal direction are on an inner peripheral side, and second ends of the positive electrode and the negative electrode in the longitudinal direction are on an outer peripheral side. The positive electrode lead and the negative electrode lead are extended out from a first end side in a width direction of the positive electrode and the negative electrode, and a first thickness of the positive electrode on the first end side is thinner than a second thickness of the positive electrode on a second end side in the width direction.

### SUMMARY

In view of the technical problem in the Background, this application provides a secondary battery, a preparation method thereof, and an apparatus containing such secondary battery, so that a secondary battery having high energy density also has good cycling performance.

To achieve the above objective, a first aspect of this invention provides a secondary battery as set out in claim 1.

A second aspect of this application provides an apparatus comprising a secondary battery as set out in claim 15.

Other aspects of this invention can be found in the dependent claims.

Compared with the prior art, this application includes at least the following beneficial effects:

In the secondary battery of this application, the electrode plate film layer includes the first zone and the second zone, and the first zone and the second zone satisfies a specific relationship in terms of thickness, greatly reducing the interfacial resistance and polarization of the battery. Therefore, the secondary battery of this application can have both high energy density and good cycling performance.

### BRIEF DESCRIPTION OF DRAWINGS

To describe the technical solutions of this application more clearly, the following briefly describes the accompanying drawings used in this application.

In addition, the accompanying drawings in the following description show merely some embodiments of this application, and a person of ordinary skill in the art may still derive other drawings from these accompanying drawings without creative efforts.

FIG. 1 is a schematic diagram of an embodiment of a secondary battery according to this application;
FIG. 2 is an exploded view of FIG. 1;
FIG. 3 is a schematic diagram of an embodiment of an electrode plate according to this application;
FIG. 4 is a schematic diagram of another embodiment of an electrode plate according to this application;
FIG. 5 is a schematic diagram of an embodiment of an electrode assembly according to this application;
FIG. 6 is a schematic diagram of another embodiment of an electrode assembly according to this application;
FIG. 7 is a schematic diagram of an embodiment of a battery module according to this application;
FIG. 8 is a schematic diagram of an embodiment of a battery pack according to this application;
FIG. 9 is an exploded view of the battery pack in FIG. 8; and
FIG. 10 is a schematic diagram of an embodiment of an apparatus according to this application.

## DETAILED DESCRIPTION OF EMBODIMENTS

The following further describes this application with reference to embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each separately disclosed point or individual value may itself be a lower limit or upper limit to be combined with any other point or individual value or combined with any other lower limit or upper limit to form a range not expressly recorded.

In the description of this specification, it should be noted that, unless otherwise stated, "more than" and "less than" are inclusive of the present number, and "more" in "one or more" means two or more than two.

Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed by using the methods provided in the examples of this application).

### Secondary battery

The secondary battery of this application includes an electrode plate and a tab, and the electrode plate includes a current collector and an electrode film layer disposed on the current collector. The electrode film layer has a first zone and a second zone along an extension direction of the tab, where the second zone is closer to the tab than the first zone, a thickness of the first zone is denoted as H1, a thickness of the second zone is denoted as H2, and the secondary battery of this application satisfies $0.6 \leq H2/H1 < 1$.

In the secondary battery of this application, the electrode film layer includes different zones with a specific relationship in terms of thickness. Without wishing to be constrained by any theory, it is believed that such a structure allows a marginal space in the film layer to be reasonably designed, thereby enhancing electrolyte retention capacity of the film layer and improving infiltration of electrolyte into the film layer so as to increase the utilization efficiency of active materials and effectively improve long-term cycling performance of the battery. In addition, when thicknesses of various zones in the film layer conform to the above design, time that the electrolyte infiltrates to the inside of the film layer can be effectively shortened, so that the electrode plate is uniformly infiltrated by the electrolyte at an early stage of cycling, thereby effectively reducing resistance between the film layers, increasing the utilization efficiency of active materials, and effectively improving the overall performance of the battery.

In the secondary battery of this application, the electrode plate is a a negative-electrode plate. In unclaimed examples, the electrode plate may be a positive electrode plate.

[Negative-electrode plate]

In the secondary battery of this application, the negative-electrode plate includes a negative-electrode current collector and a negative-electrode film layer disposed on the negative-electrode current collector, where the negative-electrode film layer includes a negative-electrode active material.

The negative-electrode film layer includes a first zone and a second zone along an extension direction of the tab, where the second zone is closer to the tab than the first zone, a thickness of the first zone is denoted as H1, a thickness of

the second zone is denoted as H2, and the negative-electrode film layer satisfies $0.6 \leq H2/H1 < 1$.

In the claimed embodiments, the negative-electrode film layer satisfies $0.7 \leq H2/H1 \leq 0.8$. When the secondary battery satisfies this range, energy density of the battery can be further improved.

In the secondary battery of this application, if the negative-electrode film layer conforming to the above design also optionally satisfies one or more of the following parameters, performance of the battery can be further improved.

In some preferred embodiments, the extension direction of the tab is defined as a width direction of the negative-electrode film layer, a width of the first zone is denoted as W1, a width of the second zone is denoted as W2, and the secondary battery further satisfies $0.03 \leq W2/W1 \leq 0.1$, preferably, $0.04 \leq W2/W1 \leq 0.06$. When the width of the first zone and that of the second zone satisfy the above condition, the infiltration performance of the electrolyte can be further improved while high energy density is ensured. This is conductive to reducing resistance between the film layers so as to improve the cycling stability of the battery.

In some preferred embodiments, 0.04 mm $\leq$ H1$\leq$ 0.15 mm, more preferably, 0.05 mm $\leq$ H1 $\leq$ 0.12 mm.

In some preferred embodiments, 30 mm $\leq$ W1 $\leq$ 500 mm, more preferably, 60 mm$\leq$ W1 $\leq$ 200 mm.

The negative-electrode film layer satisfying the above condition can not only guarantee ease of processing of the negative-electrode plate but also ensure that the battery has enough active substances, thereby improving the energy density of the battery.

In the secondary battery of this application, the negative-electrode current collector may be a conventional metal foil or a composite current collector (for example, a metal material may be provided on a polymer matrix to form a composite current collector). In an example, the negative-electrode current collector may be a copper foil.

In the secondary battery of this application, the negative-electrode active material is not limited to any specific type, and any active materials that are known in the art and that can be used for negative electrodes of secondary batteries may be used, and persons skilled in the art can make selection according to actual demands.

In an example, the negative-electrode active material may include but is not limited to one or more of synthetic graphite, natural graphite, hard carbon, soft carbon, silicon-based materials and tin-based materials. The silicon-based material may be selected from one or more of elemental silicon, silicon-oxygen compounds (such as silicon monoxide), silicon-carbon compounds, silicon-nitrogen compounds, and silicon alloys. The tin-based material may be selected from one or more of elemental tin, tin-oxygen compounds, and tin alloys. These materials are all commercially available.

In some preferred embodiments, to further improve the energy density of the battery, the negative-electrode active material includes a silicon-based material.

In some preferred embodiments, the silicon-based material includes a silicon-oxygen compound (for example, $SiO_x$, $0<x<2$).

In some preferred embodiments, a mass percentage of the silicon-based material in the negative-electrode active material is $\leq$50%, preferably, 15%-30%. When the amount of the silicon-based material is within the given range, the battery can have both high energy density and good cycling performance.

In some preferred embodiments, a press density PD of the negative-electrode film layer is 1.5 g/cm$^3$ $\leq$ PD $\leq$ 1.8 g/cm$^3$, preferably, 1.6 g/cm$^3$ $\leq$ PD $\leq$ 1.7 g/cm$^3$. An excessively low PD is likely to cause fall of coating from the second zone, deteriorating cycling performance of the battery. In addition, such PD also causes reduction in volumetric energy density of the battery. An excessively high PD is not conductive to de-intercalation of active ions, increasing polarization of the battery which in turn decreases capacity of the battery. In addition, such PD also greatly impacts the infiltration of electrolyte into the first zone, affecting cycling performance of the battery.

In the secondary battery of this application, the negative-electrode film layer optionally includes a binder, a conductive agent, and other optional additives.

In an example, the conductive agent is one or more of superconducting carbon, acetylene black, carbon black, Ketjen black, carbon dot, carbon nanotube, graphene, and carbon nanofiber.

In an example, the binder is one or more of styrene-butadiene rubber (SBR), water-based acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

In an example, the other optional additives may be thickening and dispersing agents (such as sodium carboxymethyl cellulose CMC-Na), PTC thermistor materials, and the like.

It can be understood that the negative-electrode current collector includes two back-to-back surfaces in a thickness direction thereof, and the negative-electrode film layer is provided on either or both of the two back-to-back surfaces of the negative-electrode current collector.

It should be noted that the negative-electrode film layer parameters in this application all refer to parameter ranges of a film layer on one side. When the negative-electrode film layer is provided on both surfaces of the negative-electrode current collector, the parameters of the film layer on either of the two surfaces being compliant with this application are considered to fall within the protection scope of this application. In addition, thickness, width, press density, and the like of the negative-electrode film layer in this application are all parameters of a film layer cold-pressed for assembling a battery.

[Positive-electrode plate]

In the secondary battery of this application, the positive-electrode plate includes a positive-electrode current collector and a positive-electrode film layer disposed on the positive-electrode current collector, where the positive-electrode film layer includes a positive-electrode active material.

In some examples useful for understanding the invention, the positive-electrode film layer includes a first zone and a second zone along an extension direction of the tab, where the second zone is closer to the tab than the first zone, a thickness of the first zone is denoted as H1, a thickness of the second zone is denoted as H2, and the positive-electrode film layer satisfies $0.6 \leq H2/H1 < 1$.

When the positive-electrode film layer of this application conforms to the above design, for other design parameters of the first zone and second zone, reference may be made to the parameter ranges of the negative-electrode plate, without more details given herein.

In the secondary battery of this application, the positive-electrode current collector may be a conventional metal foil or a composite current collector (a metal material may be provided on a polymer matrix to form a composite current collector). In an example, the positive-electrode current collector may be an aluminum foil.

In the secondary battery of this application, the positive-electrode active material is not limited to any specific type, and any active materials that are known in the art and that can be used for positive electrodes of secondary batteries may be used, and persons skilled in the art can make selection according to actual demands.

In an example, the positive-electrode active material may include but is not limited to one or more of lithium transition metal composite oxides, lithium-containing phosphates with an olivine structure, and their respective modified compounds. The lithium transition metal composite oxide may include but is not limited to one or more of lithium cobalt oxides, lithium nickel oxides, lithium manganese oxides, lithium nickel cobalt oxides, lithium manganese cobalt oxides, lithium manganese nickel oxides, lithium nickel manganese cobalt oxides, lithium nickel aluminum cobalt oxides, and modified compounds thereof. The lithium-containing phosphates with an olivine structure may include but are not limited to one or more of lithium iron phosphate, composite materials of lithium iron phosphate and carbon, lithium manganese phosphate, composite materials of lithium manganese phosphate and carbon, lithium ferric manganese phosphate, composite materials of lithium ferric manganese phosphate and carbon, and modified compounds thereof. These materials are all commercially available.

In some preferred embodiments, to further improve the energy density of the battery, the positive-electrode active material may include one or more of lithium transition metal composite oxides shown in formula 1 and modified compounds thereof:

$$Li_aNi_bCo_cM_dO_eA_f \qquad \text{formula 1}$$

in formula 1, $0.8 \leq a \leq 1.2$, $0.5 \leq b < 1$, $0 < c < 1$, $0 < d < 1$, $1 \leq e \leq 2$, $0 \leq f \leq 1$, M is selected from one or more of Mn, Al, Zr, Zn, Cu, Cr, Mg, Fe, V, Ti and B, and A is selected from one or more of N, F, S, and Cl.

In this application, the modified compounds of the materials may be obtained through doping modification and/or surface coating modification to the materials.

In the secondary battery of this application, the positive-electrode film layer optionally includes a binder, a conductive agent, and other optional additives.

In an example, the conductive agent is one or more of superconducting carbon, acetylene black, carbon black, Ketjen black, carbon dot, carbon nanotube, Super P (SP), graphene, and carbon nanofiber.

In an example, the binder is one or more of styrene-butadiene rubber (SBR), water-based acrylic resin (water-based acrylic resin), polyvinylidene fluoride (PVDF), polytetrafluoroethylene (PTFE), ethylene vinyl acetate (EVA), polyacrylic acid (PAA), carboxymethyl cellulose (CMC), polyvinyl alcohol (PVA), and polyvinyl butyral (PVB).

It can be understood that the positive-electrode current collector includes two back-to-back surfaces in a thickness direction thereof, and the positive-electrode film layer is provided on either or both of the two back-to-back surfaces of the positive-electrode current collector.

It should be noted that the positive-electrode film layer parameters in this application all refer to parameter ranges of a film layer on one side. When the positive-electrode film layer is provided on both surfaces of the positive-electrode current collector, the parameters of the film layer on either of the two surfaces being compliant with this application are considered to fall within the protection scope of this application. In addition, thickness, width, and the like of the positive-electrode film layer in this application are all parameters of a film layer cold-pressed for assembling a battery.

[Electrolyte]

The secondary battery of this application further includes an electrolyte, and the electrolyte provides ion conduction between the positive-electrode plate and the negative-electrode plate. The electrolyte may include an

electrolytic salt and a solvent.

In an example, the electrolytic salt may be selected from one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)bisfluorosulfonyl imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluoro (oxalate) borate), and LiTFOP (lithium tetrafluoro oxalate phosphate).

In an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfonyl methane (MSM), ethyl methyl sulfone (EMS), and diethyl sulfone (ESE).

In some preferred embodiments, the electrolyte further includes an additive. For example, the additive may include a negative-electrode film forming additive, or may include a positive-electrode film forming additive, or may include an additive capable of improving some performance of a battery, for example, an additive for improving over-charge performance of the battery, an additive for improving high-temperature performance of batteries, and an additive for improving low-temperature performance of the battery.

[Separator]

The secondary battery of this application further includes a separator, and the separator is arranged between the positive-electrode plate and the negative-electrode plate to provide a separation function. This application does not impose any special limitations on the separator, and any commonly known porous separator with good chemical stability and mechanical stability may be used.

In an example, the separator may be selected from one or more of glass fiber, non-woven fabrics, polyethylene, polypropylene, and polyvinylidene fluoride. The separator may be a single-layer thin film or a multi-layer composite thin film. When the separator is a multi-layer composite thin film, the multiple layers may be made of the same or different materials.

All materials used in this application are commercially available.

In this application, thickness of an electrode plete- film layer has the meaning well-known in the art, and can be tested by known methods in the art. For example, the thickness may be measured by a ten-thousandths micrometer (of model Mitutoyo293-100 with 0.1$\mu$m resolution).

In this application, width of an electrode film layer has the meaning well-known in the art, and can be tested by known methods in the art. For example, the width may be measured by a straight rule.

In this application, press density of the electrode film layer has the meaning well-known in the art, and can be tested by known methods in the art. For example, a single-side-coated and cold-pressed electrode plate (in the case of an electrode plate having coating on both sides, a film layer on one side thereof may be wiped off firstly) is punched into a small wafer with an area of S 1; the wafer is weighed and its weight is recorded as M1, and the thickness of the electrode film layer is measured by the above method and recorded as T. Then, the film layer of the weighed electrode plate is wiped off, and the negative-electrode current collector is weighed and recorded as M0. Press density PD of electrode film layer = (M1 - M0)/(S1 x T).

In some preferred embodiments, the secondary battery of this application is a lithium-ion secondary battery.

In some embodiments, the above positive electrode plate, negative electrode plate, and separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

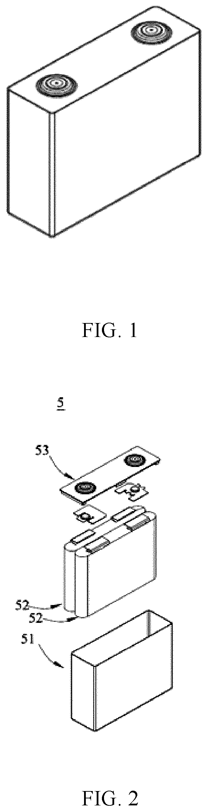

This application does not impose special limitations on the shape of the secondary battery, and the battery may be cylindrical, rectangular, or of any other shapes. FIG. 1 shows a secondary battery of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 covers the opening to close the accommodating cavity. A positive-electrode plate, a negative-electrode plate, and a separator may be wound or stacked to form an electrode assembly 52. The electrode assembly 52 is packaged

in the accommodating cavity. The electrolyte is infiltrated into the electrode assembly 52. There may be one or more electrode assemblies 52 in the secondary battery 5, and the quantity may be adjusted as required.

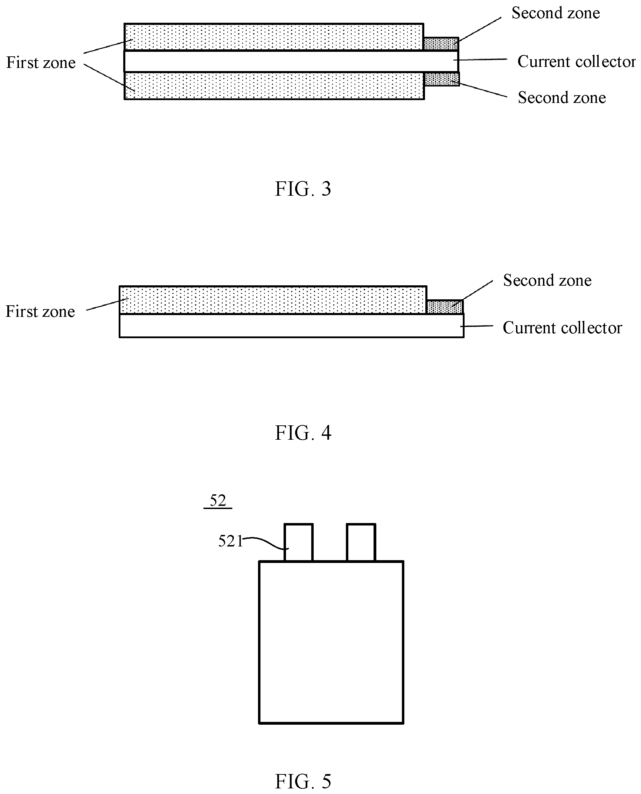

FIG. 3 is a schematic diagram of an electrode plate with an electrode film layer on both surfaces of a current collector, and FIG. 4 is a schematic diagram of an electrode plate with an electrode film layer on only one surface of a current collector.

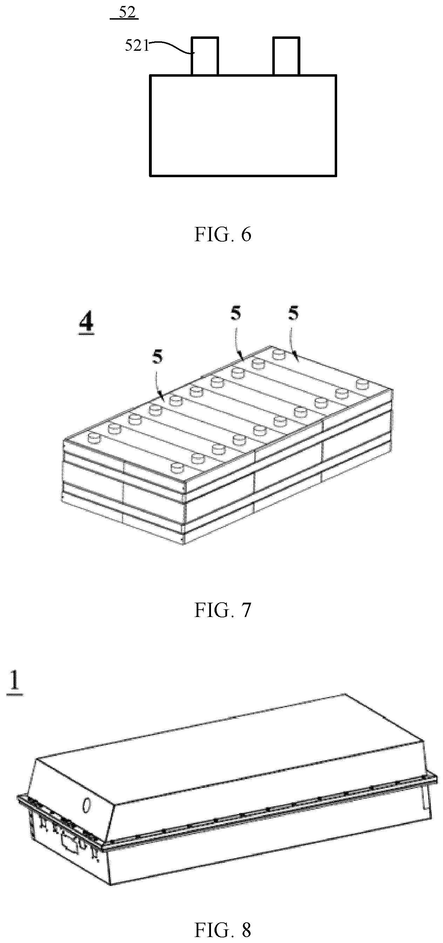

In the secondary battery of this application, referring to schematic diagrams shown in FIG. 5 and FIG. 6, the electrode assembly 52 further includes two extending tabs 521 (namely, a positive-electrode tab and a negative-electrode tab), and the two extending tabs 521 extend out from a same side of the electrode assembly. Generally, the positive-electrode active material is applied onto a coating zone of the positive-electrode plate, and the positive-electrode tab is formed by stacking a plurality of uncoated zones extending from the coating zone of the positive-electrode plate; the negative-electrode active material is applied onto a coating zone of the negative-electrode plate, and the negative-electrode tab is formed by stacking a plurality of uncoated zones extending from the coating zone of the negative-electrode plate. The positive-electrode/negative-electrode tab may be obtained by punching or laser die cutting. Furthermore, the two tabs may be electrically connected to corresponding electrodes (which may be disposed onto a top cover of an outer package of the battery) via respective adapting sheets, so as to lead out electric energy.

In some embodiments, secondary batteries may be assembled into a battery module. The battery module may include a plurality of secondary batteries whose quantity may be adjusted according to the use case and capacity of the battery module.

FIG. 7 shows a battery module 4 used as an example. Referring to FIG. 7, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted according to the use case and capacity of the battery pack.

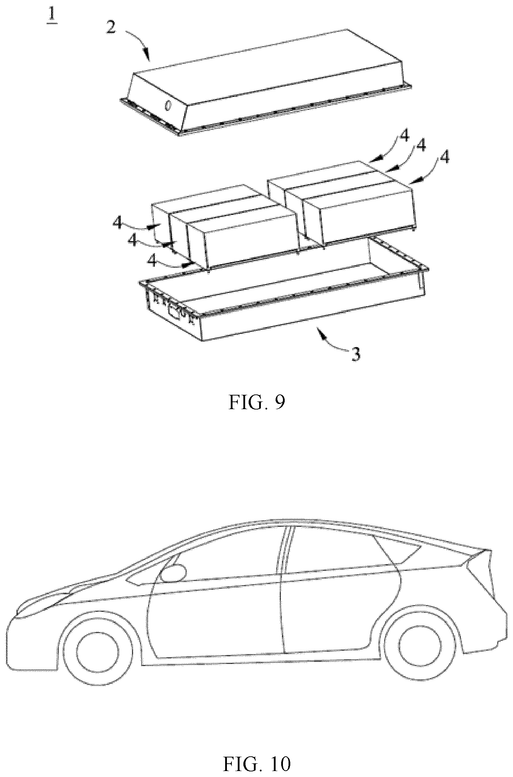

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 covers the lower box body 3 to form an enclosed space for accommodating the battery modules 4. The plurality of battery modules 4 may be arranged in the battery box in any manner.

## Preparation method of secondary battery

A preparation method of such secondary battery. The method includes the following steps: preparing an electrode plate (a negative-electrode plate) such that an electrode film layer has a first zone and a second zone along an extension direction of a tab, where the second zone is closer to the tab than the first zone, a thickness of the first zone is denoted as H1, a thickness of the second zone is denoted as H2, and the electrode film layer satisfies $0.6 \leq H2/H1 < 1$ in examples useful for understanding the invention. The electrode plate is obtained by using methods known to persons skilled in the art, for example, gaskets of different specifications may be used in a coating process.

Except for the preparation method of the electrode plate in this application, other constructing and preparation methods of the secondary battery of this application are commonly known. For example, the positive-electrode plate, the separator, and the negative-electrode plate are sequentially stacked so that the separator is located between the positive-electrode plate and the negative-electrode plate to provide separation. Then, the resulting stacks are wound (or laminated) to form the electrode assembly; the electrode assembly is placed into the outer package which is filled with electrolyte after drying, followed by processes including vacuum packaging, standing, formation, and shaping, to obtain the secondary battery.

## Apparatus

A third aspect of this application provides an apparatus. The apparatus includes the secondary battery in the first aspect of this application or a secondary battery prepared by using the method according to the second aspect of this application. The secondary battery may be used as a power source of the apparatus or an energy storage unit of the apparatus. The apparatus in this application uses the secondary battery provided by this application, and therefore has at least the same advantages as the secondary battery.

The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a

satellite, an energy storage system, and the like.

A secondary battery, a battery module, or a battery pack may be selected for the apparatus according to requirements for using the apparatus.

FIG. 10 shows an apparatus as an example. The apparatus is a battery electric vehicle, a hybrid electric vehicle, a plug-in hybrid electric vehicle, or the like. To meet requirements of the apparatus for high power and high energy density of the secondary batteries, a battery pack or a battery module may be used.

In another example, the apparatus may be a mobile phone, a tablet computer, a notebook computer, or the like. Such apparatus is usually required to be light and thin, and may use a secondary battery as its power source.

The following further describes beneficial effects of this application with reference to examples.

## Examples

To make the technical problems, technical solutions, and beneficial effects of this application clearer, the following further describes this application in detail with reference to the examples and the accompanying drawings. Apparently, the described examples are merely some but not all of the examples of this application. The following description of at least one illustrative example is merely illustrative and definitely is not construed as any limitation on this application or on use of this application.

### I. **Preparation method of secondary battery**

Example 1

1. Preparation of positive-electrode plate

A positive-electrode active material $LiNi_{0.8}Co_{0.1}Mn_{0.1}O_2$ (NCM811), a conductive agent carbon black (Super P), and a binder polyvinylidene fluoride (PVDF) were uniformly mixed in a mass ratio of 96:3:1 in a proper amount of solvent N-methylpyrrolidone (NMP), to obtain a positive-electrode slurry. The positive-electrode slurry was applied on a positive-electrode current collector aluminum foil, followed by processes including drying, cold pressing, slitting, and cutting, to obtain a positive-electrode plate.

2. Preparation of negative-electrode plate

Negative-electrode active material silicon monoxide and synthetic graphite were uniformly mixed at a mass ratio of 20:80, and then were uniformly mixed with a conductive agent carbon black (Super P), a binder styrene-butadiene rubber (SBR), and sodium carboxymethyl cellulose (CMC-Na) in a mass ratio of 96:1.5:1.5:1.0 in a proper amount of solvent deionized water, to obtain a negative-electrode slurry. The negative-electrode slurry was applied on a negative-electrode current collector copper foil, followed by processes including drying, cold pressing, slitting, and cutting, to obtain a negative-electrode plate. A first zone and a second zone were formed on the negative-electrode slurry during coating, where a thickness H1 of the first zone was 0.06 mm, a thickness H2 of the second zone was 0.036 mm, and a press density of a negative-electrode film layer was 1.65 g/cm$^3$.

3. Separator

The separator was a polyethylene (PE) film.

4. Preparation of electrolyte

Ethylene carbonate (EC) and ethyl methyl carbonate (EMC) were mixed in a mass ratio of 30:70, to obtain an organic solvent; a fully dried electrolytic salt $LiPF_6$ was dissolved in the above mixed solvent, with a concentration of 1.3 mol/L. Then, 6% fluoroethylene carbonate (FEC) as an additive was added into the mixed solvent, and uniformly mixed with the solvent, to obtain an electrolyte. A concentration of the electrolytic salt was calculated based on the total volume of the electrolyte, and the additive content is a weight percentage calculated based on the total weight of the electrolyte.

5. Preparation of secondary battery

The positive-electrode plate, the separator, and the negative-electrode plate were sequentially stacked, so that the separator was located between the positive-electrode plate and the negative-electrode plate to provide separation. Then, the resulting stacks were wound to form an electrode assembly. The electrode assembly was placed in the outer

package and dried, and the prepared electrolyte was injected, followed by processes including vacuum packaging, standing, formation, and shaping, to obtain a secondary battery.

Secondary batteries in Examples 2 to 11 and Comparative Examples 1 to 2 were prepared in the same method as the secondary battery in Example 1 only with technical parameters for the preparation of the negative-electrode plate changed. Table 1 gives details about these different product parameters.

## II. Performance test method

1. Battery resistance test

At 25°C, the secondary batteries prepared in the Examples and Comparative Examples were charged to a charge cutoff voltage of 4.25 V at a constant current charge rate of 0.2C, then charged at a constant voltage until current was ≤ 0.05C, left for 5 minutes, then discharged to a discharge depth of 10% at a constant current discharge rate of 0.2C, left for 5 minutes, and finally discharged to a discharge depth of 20% at a rate of 2C ($I_d$). Voltage after and voltage before the 2C discharge were respectively recorded as $U_1$ and $U_2$, and therefore discharge resistance is $R_d = (U_1 - U_2)/I_d$.

2. Cycling performance test

At 25°C, the secondary batteries prepared in the Examples and Comparative Examples were charged to a charge cutoff voltage of 4.25 V at a constant current charge rate of 0.5C, then charged at a constant voltage until current was ≤ 0.05C, left for 5 minutes, then discharged to a discharge cutoff voltage of 2.5 V at a constant current discharge rate of 1C, and left for 5 minutes. This was one charge and discharge cycle. The batteries were subjected to charge and discharge cycling until capacity of the batteries was declined to 80%. The number of cycles at that point was the cycling performance of the batteries at 25°C.

**Table 1**

| Number | Thickness of first zone H1 (mm) | Width of first zone W1 (mm) | Thickness of second zone H2 (mm) | Width of second zone W2 (mm) | H2/H1 | W2/W1 | Resistance (mΩ) | Cycling performance (cycles cls to 80% SOH) |
|---|---|---|---|---|---|---|---|---|
| Example 1 | 0.06 | 84 | 0.036 | 4.2 | 0.60 | 0.05 | 1.08 | 832 |
| Example 2 | 0.06 | 84 | 0.042 | 4.2 | 0.70 | 0.05 | 0.93 | 858 |
| Example 3 | 0.06 | 84 | 0.045 | 4.2 | 0.75 | 0.05 | 0.82 | 876 |
| Example 4 | 0.06 | 84 | 0.048 | 4.2 | 0.80 | 0.05 | 0.95 | 855 |
| Example 5 | 0.06 | 84 | 0.054 | 4.2 | 0.90 | 0.05 | 1.09 | 829 |
| Example 6 | 0.06 | 84 | 0.045 | 1.680 | 0.75 | 0.02 | 1.13 | 814 |
| Example 7 | 0.06 | 84 | 0.045 | 2.520 | 0.75 | 0.03 | 1.02 | 841 |
| Example 8 | 0.06 | 84 | 0.045 | 3.360 | 0.75 | 0.04 | 0.96 | 852 |
| Example 9 | 0.06 | 84 | 0.045 | 5.040 | 0.75 | 0.06 | 0.98 | 854 |
| Example 10 | 0.06 | 84 | 0.045 | 6.720 | 0.75 | 0.08 | 1.07 | 835 |
| Example 11 | 0.06 | 84 | 0.045 | 9.240 | 0.75 | 0.11 | 1.15 | 811 |
| Comparative Example 1 | 0.06 | 84 | 0.030 | 4.2 | 0.50 | 0.05 | 1.21 | 793 |
| Comparative Example 2 (not thinned) | 0.06 | 84 | 0.060 | 0.0 | 1.00 | 0.00 | 1.35 | 783 |

According to the above comparison between the Examples 1 to 5 and the Comparative Examples 1 to 2, when the electrode plate (negative-electrode plate) satisfies $0.6 \leq H2/H1 < 1$, infiltration of electrolyte into the electrode plate is effectively improved and interfacial resistance of the batteries is reduced, thereby greatly improving cycling performance of the batteries. Examples 1 and 5 are provided for understanding the invention.

According to the above Examples 3 and 6 to 11, when the electrode film layer (negative-electrode plate) of this application satisfies $0.03 \leq W2/W1 \leq 0.1$, especially when it satisfies $0.04 \leq W2/W1 \leq 0.06$, the cycling performance of the batteries can be further improved.

The foregoing descriptions are merely specific embodiments of this application, but are not intended to limit the protection scope of this application. The scope of protection of this application shall be subject to the scope of protection of

the claims.

## Claims

1. A secondary battery (5), comprising a negative-electrode plate and a tab (521), wherein the negative-electrode plate comprises a negative-electrode current collector and a negative-electrode film layer disposed on the negative-electrode current collector, and wherein the electrode film layer has a first zone and a second zone along an extension direction of the tab (521), wherein the second zone is closer to the tab (521) than the first zone, a thickness of the first zone is denoted as H1, a thickness of the second zone is denoted as H2, and the electrode film layer satisfies $0.7 \leq H2/H1 \leq 0.8$.

2. The secondary battery (5) according to claim 1, wherein the extension direction of the tab (521) is defined as a width direction of the electrode film layer, a width of the first zone is denoted as W1, a width of the second zone is denoted as W2, and the secondary battery (5) further satisfies $0.03 \leq W2/W1 \leq 0.1$.

3. The secondary battery (5) according to claim 2, wherein the secondary battery (5) satisfies $0.04 \leq W2/W1 \leq 0.06$.

4. The secondary battery (5) according to any one of claims 1 to 2, wherein 0.04 mm $\leq$ H1 $\leq$ 0.15 mm.

5. The secondary battery (5) according to claim 4, wherein 0.05 mm $\leq$ H1 $\leq$ 0.12 mm.

6. The secondary battery (5) according to any one of claims 1 to 5, wherein 30 mm $\leq$ W1 $\leq$ 500 mm.

7. The secondary battery (5) according to claim 6, wherein 60 mm $\leq$ W1 $\leq$ 200 mm.

8. The secondary battery (5) according to claim 1, wherein the negative-electrode film layer comprises a negative-electrode active material, and the negative-electrode active material comprises a silicon-based material.

9. The secondary battery (5) according to claim 8, wherein the silicon-based material comprises a silicon-oxygen compound.

10. The secondary battery (5) according to any one of claims 8 to 9, wherein the mass percentage of the silicon-based material in the negative-electrode active material is ≤50%.

11. The secondary battery (5) according to claim 10, wherein the mass percentage of the silicon-based material in the negative-electrode active material is 15%-30%.

12. The secondary battery (5) according to any one of claims 7 to 11, wherein a press density PD of the negative-electrode film layer is 1.5 g/cm$^3$ $\leq$ PD $\leq$ 1.8 g/cm$^3$, preferably, 1.6 g/cm$^3$ $\leq$ PD $\leq$ 1.7 g/cm$^3$, wherein the electrode plate can be tested by punching a single-side-coated and cold-pressed electrode plate into a wafer with an area of S1, weighing the wafer to determine a weight M1, measuring the thickness T of the electrode plate wiping the electrode film layer from the weighed electrode plate and weighing the wiped off electrode plate wherein the PD of the electrode film layer = (M1 - M0)/(S1 x T).

13. The secondary battery (5) according to any one of claims 1 to 12, wherein the secondary battery (5) comprises a positive-electrode plate, wherein the positive-electrode plate comprises a positive-electrode current collector and a positive-electrode film layer disposed on the positive-electrode current collector, the positive-electrode film layer comprises a positive-electrode active material, and the positive-electrode active material comprises a lithium transition metal composite oxide.

14. The secondary battery (5) according to claim 13, wherein the positive-electrode active material comprises one or more of lithium transition metal composite oxides shown in formula 1 and modified compounds thereof;

$$Li_aNi_bCo_cM_dO_eA_f \qquad \text{formula 1}$$

in formula 1, $0.8 \leq a \leq 1.2$, $0.5 \leq b < 1$, $0 < c < 1$, $0 < d < 1$, $1 \leq e \leq 2$, $0 \leq f \leq 1$, M is selected from one or more of Mn, Al, Zr, Zn, Cu, Cr, Mg, Fe, V, Ti and B, and A is selected from one or more of N, F, S, and Cl.

**15.** An apparatus, comprising the secondary battery (5) according to any one of claims 1 to 14.

## Patentansprüche

**1.** Sekundärbatterie (5), umfassend eine Negativelektrodenplatte und eine Lasche (521), wobei die Negativelektrodenplatte einen Negativelektrodenstromsammler und eine Negativelektrodenfilmschicht, die auf dem Negativelektrodenstromsammler angeordnet ist, umfasst, und wobei die Elektrodenfilmschicht entlang einer Erstreckungsrichtung der Lasche (521) eine erste Zone und eine zweite Zone aufweist, wobei die zweite Zone näher an der Lasche (521) ist als die erste Zone, eine Dicke der ersten Zone als H1 bezeichnet wird, eine Dicke der zweiten Zone als H2 bezeichnet wird und die Elektrodenfilmschicht $0{,}7 \leq H2/H1 \leq 0{,}8$ erfüllt.

**2.** Sekundärbatterie (5) nach Anspruch 1, wobei die Erstreckungsrichtung der Lasche (521) als eine Breitenrichtung der Elektrodenfilmschicht definiert ist, eine Breite der ersten Zone als W1 bezeichnet wird, eine Breite der zweiten Zone als W2 bezeichnet wird und die Sekundärbatterie (5) ferner $0{,}03 \leq W2/W1 \leq 0{,}1$ erfüllt.

**3.** Sekundärbatterie (5) nach Anspruch 2, wobei die Sekundärbatterie (5) $0{,}04 \leq W2/W1 \leq 0{,}06$ erfüllt.

**4.** Sekundärbatterie (5) nach einem der Ansprüche 1 bis 2, wobei $0{,}04$ mm $\leq H1 \leq 0{,}15$ mm.

**5.** Sekundärbatterie (5) nach Anspruch 4, wobei $0{,}05$ mm $\leq H1 \leq 0{,}12$ mm.

**6.** Sekundärbatterie (5) nach einem der Ansprüche 1 bis 5, wobei 30 mm $\leq W1 \leq$ 500 mm.

**7.** Sekundärbatterie (5) nach Anspruch 6, wobei 60 mm $\leq W1 \leq$ 200 mm.

**8.** Sekundärbatterie (5) nach Anspruch 1, wobei die Negativelektrodenfilmschicht ein aktives Negativelektrodenmaterial umfasst und das aktive Negativelektrodenmaterial ein siliciumbasiertes Material umfasst.

**9.** Sekundärbatterie (5) nach Anspruch 8, wobei das siliciumbasierte Material eine Silicium-Sauerstoff-Verbindung umfasst.

**10.** Sekundärbatterie (5) nach einem der Ansprüche 8 bis 9, wobei der Massenanteil des siliciumbasierten Materials im aktiven Negativelektrodenmaterial ≤ 50 % beträgt.

**11.** Sekundärbatterie (5) Ansprüche 10, wobei der Massenanteil des siliciumbasierten Materials im aktiven Negativelektrodenmaterial 15% - 30 % beträgt.

**12.** Sekundärbatterie (5) nach einem der Ansprüche 7 bis 11, wobei eine Pressdichte PD der Negativelektrodenfilmschicht $1{,}5\ g/cm^3 \leq PD \leq 1{,}8\ g/cm^3$, vorzugsweise $1{,}6\ g/cm^3 \leq PD \leq 1{,}7\ g/cm^3$ beträgt, wobei die Elektrodenplatte geprüft werden kann, indem eine einseitig beschichtete und kaltgepresste Elektrodenplatte zu einem Wafer mit einer Fläche von S1 gestanzt wird, der Wafer gewogen wird, um ein Gewicht M1 zu bestimmen, die Dicke T der Elektrodenplatte gemessen wird, die Elektrodenfilmschicht von der gewogenen Elektrodenplatte abgewischt wird und die abgewischte Elektrodenplatte gewogen wird, wobei die PD der Elektrodenfilmschicht = $(M1 - M0)/(S1 \times T)$ ist.

**13.** Sekundärbatterie (5) nach einem der Ansprüche 1 bis 12, wobei die Sekundärbatterie (5) eine Positivelektrodenplatte umfasst, wobei die Positivelektrodenplatte einen Positivelektrodenstromsammler und eine Positivelektrodenfilmschicht, die auf dem Positivelektrodenstromsammler angeordnet ist, umfasst, die Positivelektrodenfilmschicht ein aktives Positivelektrodenmaterial umfasst und das aktive Positivelektrodenmaterial ein Lithium-Übergangsmetall-Verbundoxid umfasst.

**14.** Sekundärbatterie (5) nach Anspruch 13, wobei das aktive Positivelektrodenmaterial eines oder mehrere der in Formel 1 gezeigten Lithium-Übergangsmetall-Verbundoxide und modifizierte Verbindungen davon umfasst;

$$Li_aNi_bCo_cM_dO_eA_f \quad \text{Formel 1}$$

wobei in Formel 1, $0{,}8 \leq a \leq 1{,}2$, $0{,}5 \leq b < 1{,}0 < c < 1$, $0 < d < 1$, $1 \leq e \leq 2$, $0 \leq f \leq 1$, M aus einem oder mehreren von Mn, Al, Zr, Zn, Cu, Cr, Mg, Fe, V, Ti und B ausgewählt ist, und A aus einem oder mehreren von N, F, S und Cl ausgewählt ist.

**15.** Einrichtung, umfassend die Sekundärbatterie (5) nach einem der Ansprüche 1 bis 14.

## Revendications

**1.** Batterie rechargeable (5), comprenant une plaque d'électrode négative et une patte (521), la plaque d'électrode négative comprenant un collecteur de courant d'électrode négative et une couche de film d'électrode négative disposée sur le collecteur de courant d'électrode négative, et la couche de film d'électrode ayant une première zone et une deuxième zone le long d'une direction d'extension de la patte (521), la deuxième zone étant plus proche de la patte (521) que la première zone, une épaisseur de la première zone est notée H1, une épaisseur de la deuxième zone est notée H2, et la couche de film d'électrode satisfait la relation 0,7 ≤ H2/H1 ≤ 0,8.

**2.** Batterie rechargeable (5) selon la revendication 1, dans laquelle la direction d'extension de la patte (521) est définie comme une direction de largeur de la couche de film d'électrode, une largeur de la première zone est notée W1, une largeur de la deuxième zone est notée W2, et la batterie rechargeable (5) satisfait en outre la relation 0,03 ≤ W2/W1 ≤ 0,1.

**3.** Batterie rechargeable (5) selon la revendication 2, la batterie rechargeable (5) satisfaisant la relation 0,04 ≤ W2/W1 ≤ 0,06.

**4.** Batterie rechargeable (5) selon l'une quelconque des revendications 1 à 2, dans laquelle 0,04 mm ≤ H1 ≤ 0,15 mm.

**5.** Batterie rechargeable (5) selon la revendication 4, dans laquelle 0,05 mm ≤ H1 ≤ 0,12 mm.

**6.** Batterie rechargeable (5) selon l'une quelconque des revendications 1 à 5, dans laquelle 30 mm ≤ W1 ≤ 500 mm.

**7.** Batterie rechargeable (5) selon la revendication 6, dans laquelle 60 mm ≤ W1 ≤ 200 mm.

**8.** Batterie rechargeable (5) selon la revendication 1, dans laquelle la couche de film d'électrode négative comprend un matériau actif d'électrode négative, et le matériau actif d'électrode négative comprend un matériau à base de silicium.

**9.** Batterie rechargeable (5) selon la revendication 8, dans laquelle le matériau à base de silicium comprend un composé silicium-oxygène.

**10.** Batterie rechargeable (5) selon l'une quelconque des revendications 8 à 9, dans laquelle le pourcentage massique du matériau à base de silicium dans le matériau actif d'électrode négative est ≤ 50 %.

**11.** Batterie rechargeable (5) selon la revendication 10, dans laquelle le pourcentage massique du matériau à base de silicium dans le matériau actif d'électrode négative est de 15 % à 30 %.

**12.** Batterie rechargeable (5) selon l'une quelconque des revendications 7 à 11, dans laquelle une masse volumique compacté PD de la couche de film d'électrode négative est 1,5 g/cm$^3$ ≤ PD ≤ 1,8 g/cm$^3$, de préférence, 1,6 g/cm$^3$ ≤ PD ≤ 1,7 g/cm$^3$, la plaque d'électrode pouvant être testée en poinçonnant une plaque d'électrode enduite sur une seule face et pressée à froid en une pastille de surface S1, peser la pastille pour déterminer un poids M1, mesurer l'épaisseur T de la plaque d'électrode, essuyer la couche de film d'électrode de la plaque d'électrode pesée et peser la plaque d'électrode essuyée, dans laquelle la PD de la couche de film d'électrode = (M1 - M0)/(S1 x T).

**13.** Batterie rechargeable (5) selon l'une quelconque des revendications 1 à 12, la batterie rechargeable (5) comprenant une plaque d'électrode positive, la plaque d'électrode positive comprenant un collecteur de courant d'électrode positive et une couche de film d'électrode positive disposée sur le collecteur de courant d'électrode positive, la couche de film d'électrode positive comprenant un matériau actif d'électrode positive, et le matériau actif d'électrode positive comprenant un oxyde composite de lithium et de métal de transition.

**14.** Batterie rechargeable (5) selon la revendication 13, dans laquelle le matériau actif d'électrode positive comprend un ou plusieurs oxydes composites de lithium et de métal de transition représentés par la formule 1 et des composés modifiés de ceux-ci ;

$$Li_aNi_bCo_cM_dO_eA_f \qquad \text{formule 1}$$

dans la formule 1, $0,8 \leq a \leq 1,2$, $0,5 \leq b < 1$, $0 < c < 1$, $0 < d < 1$, $1 \leq e \leq 2$, $0 \leq f \leq 1$, M est sélectionné parmi un ou plusieurs de Mn, Al, Zr, Zn, Cu, Cr, Mg, Fe, V, Ti et B, et A est sélectionné parmi un ou plusieurs de N, F, S et Cl.

**15.** Appareil, comprenant la batterie rechargeable (5) selon l'une quelconque des revendications 1 à 14.

FIG. 1

5
53
52
52
51

FIG. 2

Second zone
First zone
Current collector
Second zone

FIG. 3

Second zone
First zone
Current collector

FIG. 4

52
521

FIG. 5

52
521

FIG. 6

4
5
5
5

FIG. 7

1

FIG. 8

1
2
4
4
4
4
4
4
3

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110010902 A
- CN 109980177 A
- US 2020112064 A1